# EUROPÄISCHE PATENTSCHRIFT

(11) **EP 0 403 994 B1**
(45) Veröffentlichungstag und Bekanntmachung des Hinweises auf die Patenterteilung: **30.08.1995**
(21) Anmeldenummer: 90111415.7
(22) Anmeldetag: 18.06.1990
(51) Int. Cl.: G01N 27/22

(54) **Kapazitiver Feuchtesensor**
Capacitive humidity sensor
Capteur capacitif d'humidité

(30) Priorität: 19.06.1989 DE 3919864
(43) Veröffentlichungstag der Anmeldung: 27.12.1990
(73) Patentinhaber: TESTOTERM MESSTECHNIK GMBH & CO., D-79853 Lenzkirch (DE)
(72) Erfinder: Demisch, Ullrich Dipl. Phys. Dr., D-7800 Freiburg (DE)
(74) Vertreter: Patentanwälte Westphal, Buchner, Mussgnug Neunert, Göhring

(56) Entgegenhaltungen:
- EP-A- 0 395 349
- DE-A- 2 848 034
- DE-A- 3 339 276
- US-A- 4 564 882
- US-A- 4 761 710
- IEEE TRANSACTIONS ON INSTRUMENTATION & MEASUREMENT Band 37, Nr. 2, Juni 1988, Seiten 300-304, New York, US; H. SHIMIZU et al.: "A Digital Hygrometer"
- IEEE TRANSACTIONS ON ELECTRON DEVICES Band ED-32, Nr. 7, Juli 1985, Seiten 1220-1223, New York, US; P.J. SCHUBERT et al.: "A Polyimide-Based Capacitive Humidity Sensor"

## Beschreibung

Die Erfindung betrifft einen kapazitiven Feuchtesensor der im Oberbegriff des Anspruchs 1 angegebenen Art.

Ein derartiger Feuchtesensor ist ein Kondensator mit wenigstens zwei Elektroden, zwischen welchen sich ein feuchteempfindliches Dielektrikum befindet. Wenigstens eine der beiden Elektroden, die aus einer unterschiedlich geformten metallischen Schicht bestehen kann, ist auf einem elektrisch hoch isolierendem Träger vorgesehen, der vorzugsweise aus Glas oder Keramik besteht und häufig als Substrat bezeichnet wird. Die zweite, außen gelegene und gleichfalls als metallische Schicht ausgebildete Elektrode ist feuchte-, insbesondere wasserdampfdurchlässig, d.h. für die in der Luft befindlichen Wassermoleküle diffundierbar.

Zwischen diesen beiden Elektrodenschichten befindet sich das für die Feuchtemessung entscheidende feuchteempfindliche Dielektrikum.

Bei bisher bekannten Feuchtesensoren dieser Art ist als dielektrische Schicht ein Polymerfilm verwendet.

Die Firma Vaisala Oy, Helsinki bietet unter der Bezeichnung "Humicap" einen Dünnschicht-Sensor an, bei welchem auf ein Glassubstrat als Träger für zwei Dünnschicht-Gold-Elektroden ein feuchteempfindliches Polymer vom Zelluloseazetat-Typ aufgebracht ist. Die zweite Elektrode ist bei dieser Anordnung von einer sehr dünnen Gold-Elektrode mit einer Dicke von 100 Å bis 200 Å gebildet, welche als gemeinsame Gegenelektrode für die beiden auf dem Glassubstrat aufgebrachten Elektroden dient. Diese beiden unteren Elektroden sind kontaktiert, so daß die Kapazität zwischen den beiden unteren Elektroden mit dem polymeren Dielektrikum gemessen wird, wobei die elektrischen Feldlinien parallel zueinander zur oberen potentialfreien Elektrode verlaufen.

Bei einem anderen Feuchtesensor, der von der Firma Coreci mit der Typenbezeichnung "H 2000" angeboten wird, dient als Dielektrikum gleichfalls ein Polymer, das aus Zelluloseazetat-Butyrat besteht. Die untere Elektrode besteht aus auf ein Glassubstrat aufgesputtertem Tantal, das anschließend oxidiert ist. Die außen gelegene feuchtedurchlässige Elektrode besteht aus einer 1 »m dicken Chromschicht, welche über eine Chrom-Nickel-Gold-Elektrode kontaktiert ist. Zur Verkürzung der Ansprechzeit ist diese Sensoranordnung nach Fertigstellung einer Wärmebehandlung derart ausgesetzt, daß die Chromelektroden samt der darunter befindlichen Polymerschicht grabenartig aufgebrochen sind.

Aus der DE 33 39 276 A 1 ist ein ähnlicher kapazitiver Feuchtesensor bekannt, bei welchem als feuchteempfindliche Schicht ein Polyimid dient. Auf diese dielektrische Schicht sind kammartig ausgebildete Gold-Elektroden aufgebracht, welche gegenüber den gleichfalls kammartig auf dem Glassubstrat angeordneten Tantalelektroden versetzt sind. Diese Anordnung hat den Vorteil, daß die Wassermoleküle direkt und damit sehr rasch in die feuchteempfindliche Schicht eindringen können.

Die Verwendung einer Polyimidfolie für einen kapazitiven Feuchtesensor ist ferner aus der DE 28 48 034 A1 bekannt. Dieser Feuchtesensor weist zwei die Elektroden bildende metallische Schichten auf, von denen die eine eine dünne Goldschicht ist, die wasserdampfdurchlässig ist, und die andere aus einem nicht rostenden Eisen-Chrom-Nickel-Stahl besteht.

Die Veränderung der Kapazität eines derartigen Feuchtesensors in Gegenwart von Luft unterschiedlichen Feuchtegehaltes beruht darauf, daß die in der Luft befindlichen Wassermoleküle in den das Dielektrikum bildenden Polymerfilm diffundieren und damit die Dielektrizitäts-Konstante (DK) und folglich den Kapazitätswert des so gebildeten Kondensators verändern. Während die Dielektrizitäts-Konstante von Polymeren zwischen 2 bis 3 liegt, beträgt die Dielektrizitäts-Konstante von Wasser 80. Das bedeutet, daß sich die Kapazität des derartigen Kondensators bei Eindringen von Wassermolekülen in die dielektrische Schicht erhöht, was für Feuchtemessungen ausgenutzt werden kann.

Für Messungen wichtig ist jedoch, daß die Meßergebnisse einerseits reproduzierbar und andererseits von anderen physikalischen oder chemischen Einflüssen weitgehend unabhängig sind.

Für die Auswahl der Polymerschicht für das Dielektrikum sind folgende Eigenschaften wichtig:
1. Reproduzierbare Abhängigkeit der Kapazität von der relativen Feuchte (rF).
2. Möglichst keine Drifteigenschaft insbesondere bei hohen Feuchten. Die bisher bekannt gewordenen Feuchtesensoren mit polymerem Dielektrikum erfüllen diese Bedingung noch nicht zufriedenstellend.
3. Hohe Temperaturverträglichkeit.
   Die Mehrzahl der bisher bekannten Sensoren ist nur bei Temperaturen bis zu 80° C verwendbar.
4. Einsetzbarkeit über den gesamten Feuchtebereich von 0 % bis 100 % rF.
   Der Einsatz der bisher bekannten Feuchtesensoren bei Feuchten über 90% rF ist in der Regel nur kurzfristig möglich, da in diesem Bereich die elektrische Charakteristik des Feuchtesensors nicht mehr reproduzierbar ist, d.h. die Kapazität der Sensoren driftet stark.
5. Hohe Beständigkeit gegenüber Fremdgasen wie SO₂, CₓH_{y}, NH₃, usw.

Die bisher verwendeten Dielektrika, insbesondere die polymeren aus der Gruppe der Polyimide zeigen starke Drifteigenschaften und mangelnde Reproduzierbarkeit bzgl. der elektrischen Charakteristik beim Einsatz in Feuchtesensoren bei Feuchten über 90 % rF.

Der vorliegenden Erfindung liegt die Aufgabe zugrunde, für den oben genannten Feuchtesensor ein Dielektrikum zu finden, welches die erwähnten Bedingungen weitgehend erfüllt.

Zur Lösung dieser Aufgabe wird gemäß vorliegender Erfindung als Dielektrikum ein Polymerfilm aus Polyetherimid vorgeschlagen.

Dieses Polymer, das bisher wegen guter Fließeigenschaften zur Herstellung von Spritzgießteilen für den Flugzeug- und Fahrzeugbau, für elektrische Geräte, Haushaltsgeräte bzw. für die Gasseparation dienenden Membranen (US-PS 4,156,597) verwendet wurde, löst überraschenderweise bei dem kapazitiven Feuchtesensor o.g. Art die gestellte Aufgabe und erfüllt besser als alle bisher bekannten Dielektrika die o.g. Bedingungen.

Der weitere Aufbau des Feuchtesensors ist Gegenstand der Unteransprüche.

Der Gegenstand der Erfindung ist nachstehend anhand eines Ausführungsbeispieles und anhand von mit Kurven belegten Meßergebnissen erläutert. In den nachstehend beschriebenen Zeichnungen zeigen
- Figur 1: - Aufsicht eines erfindungsgemäßen Feuchtesensors in vergrößerter Darstellung;
- Figur 1a: - Schnitt längs der Linie Ia-Ia in Figur 1;
- Figur 2: - Diagramm: Kapazität in Abhängigkeit von der relativen Feuchte,
- Figur 3: - Diagramm : Kapazität in Abhängigkeit von der relativen Feuchte vor und nach Lagerung im Wetterhaus, und
- Figur 4: - Diagramm: Kapazität über einen Zeitraum von 35.000 Minuten (ca. 21 Tage).

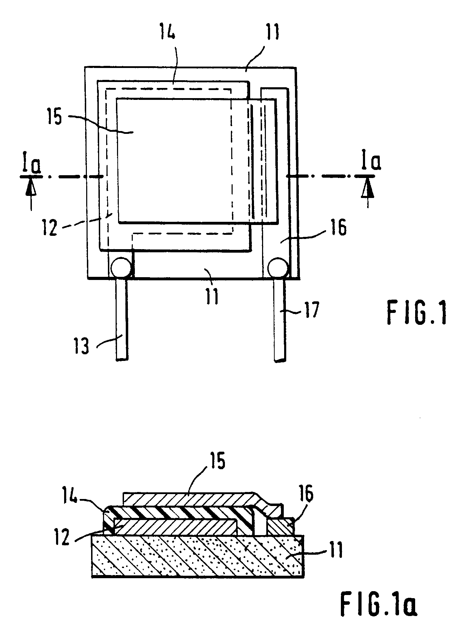

Mit den Figuren 1 und 1a ist eine mögliche Ausführungsform des erfindungsgemäßen Feuchtesensors veranschaulicht. Das den Sensor tragende Substrat 11 besteht aus einem elektrisch hochisolierendem Material, nämlich beim Ausführungsbeispiel aus Glas oder Keramik. Auf dieses Substrat ist als erste Elektrode eine metallische Schicht 12 aus Tantal, Tantal/Tantaloxid oder Gold aufgebracht, welche mit einem Anschlußdraht 13 elektrisch verbunden ist. Diese Schicht ist von einem das Dielektrikum bildenden Polymerfilm 14 überdeckt, der gemäß vorliegender Erfindung aus Polyetherimid besteht. Dieser Polymerfilm 14 kann sowohl durch einen selbsttragenden Folienfilm als auch durch eine in flüssigem Zustand aufgetragene Polymerschicht gebildet werden.

Nach oben abgedeckt ist die Sensoranordnung durch eine zweite Elektrode, die Deckelelektrode 15, die aus wasserdampfdurchlässigem Metall, vorzugsweise Gold, besteht. Diese Deckelelektrode wird vorzugsweise durch Aufdampfen auf den Polymerfilm aufgebracht.

Diese Elektrode 15 ist mit einer Anschlußelektrode 16 elektrisch leitend verbunden, welche wie die Elektrode 12 elektrisch isoliert von dieser auf dem Substrat 11 vorgesehen ist und aus Tantal oder Gold besteht. Der Stromzufuhr zu dieser Elektrode 16 dient der Anschlußdraht 17.

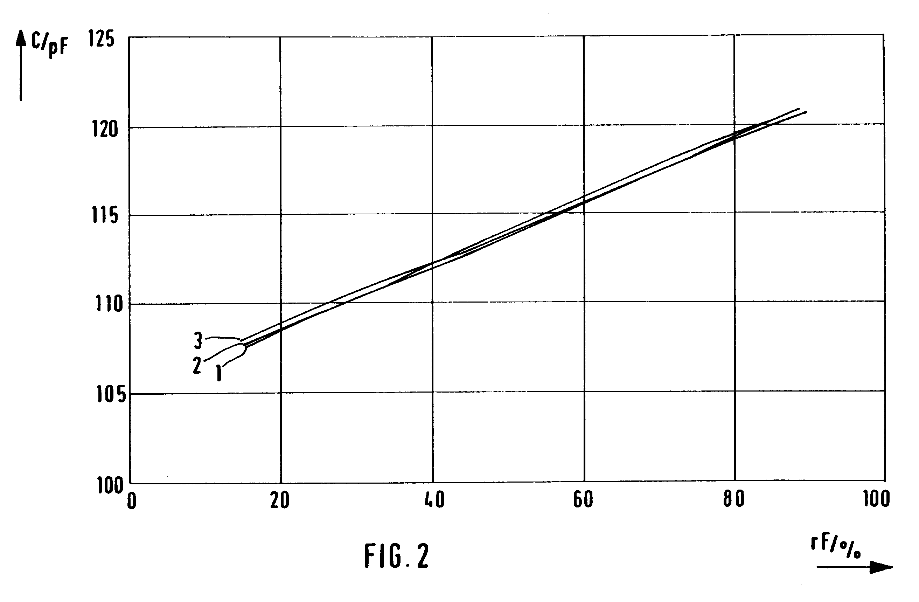

In einem Meßbereich von 15 % bis 90 % relativer Feuchte durchgeführte Messungen ergaben eine weitgehend lineare Abhängigkeit der Kapazität, die bei der Meßanordnung zwischen 107 bis etwa 120 pF liegt. Hieraus ergibt sich eine Empfindlichkeit von ca. 0,175 pF/% rF. Überraschenderweise zeigt sich eine sehr geringe Hysterese, die mit den Kurven in Figur 2 veranschaulicht ist. Gemäß Kurve 1 ist der Sensor einer zwischen 15 % und 90 % veränderbaren relativen Feuchte bei 25° C ausgesetzt. Nach einer Lagerung des Sensors über eine Dauer von ca. 6 Stunden bei einer Temperatur von 50° C und einer relativen Feuchte von 50 % ist der Sensor gemäß Kurve 2 erneut einer veränderbaren Feuchte von 15 % bis 90 % und im Anschluß daran gemäß Kurve 3 von 90 % auf 15 % ausgesetzt.

Überraschend ist nicht nur die geringe Hysterese sondern auch die hervorragende Reproduzierbarkeit der 25° C-Charakteristik. Die drei 25° C-Kennlinien 1, 2, 3 weisen untereinander nur eine maximale Abweichung von 0,25 pF auf, was einer Feuchteabweichung von 1,5 % rF entspricht.

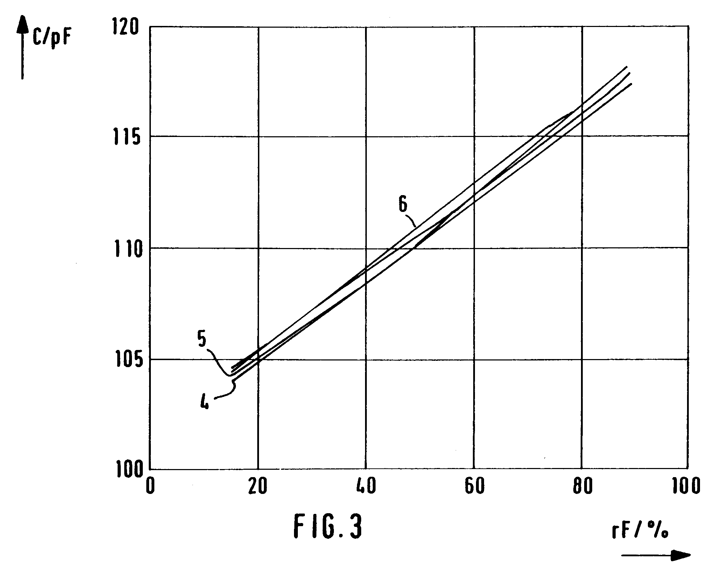

Diese hervorragende Reproduzierbarkeit beweist auch die unter praktischen Bedingungen durchgeführten Messungen, wie sie mit dem Diagramm gemäß Figur 3 belegt sind.

Hiernach wurde der Feuchtesensor zunächst wiederum einer veränderbaren Feuchte von 15 % bis 90 % bei 25° C ausgesetzt (Kurve 4). Nach einer zweiwöchigen Lagerung im Freiluftwetterhaus, während welcher der Sensor den Tages-und Nachrhythmen von Temperatur, Feuchte und Sonneneinstrahlung ausgesetzt wurde, wurde der Sensor gemäß Kurve 5 erneut der oben beschriebenen Feuchteänderung unterworfen.

Im Anschluß daran wurde die Hysteresekennlinie gemäß Kurve 6 aufgenommen.

Wie die Kurven zeigen, liegt die Reproduzierbarkeit der Kapazität in einem Bereich von ± 0,25 pF, was einer Schwankungsbreite der Feuchte von nur ± 1,5 % entspricht.

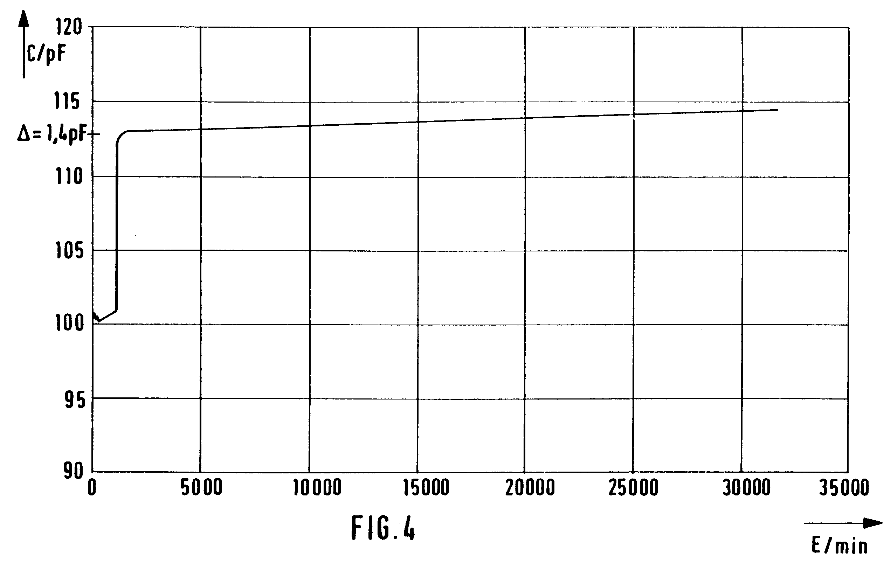

Wie die Kurve in Figur 4 veranschaulicht, besitzt der erfindungsgemäße Feuchtesensor auch ein hervorragendes Langzeitverhalten im Hochfeuchtebereich. Über eine Meßdauer von 21 Tagen (ca. 35.000 Minuten) liegt die Kapazität nahezu konstant bei ca. 113 pF.

Das Meßergebnis zeigt, daß die Drift der Kapazität bei nur 1,4 pF liegt, was einer Feuchtedrift von 9 % entspricht.

## Patentansprüche

1. Kapazitiver Feuchtesensor, bestehend aus einem Kondensator mit wenigstens zwei die Elektroden bildenden metallischen Schichten, von welchen wenigstens eine wasserdampfdurchlässig ist, wobei zwischen den Elektroden ein feuchteempfindlicher Polyimidfilm als Dielektrikum vorgesehen ist, dadurch gekennzeichnet, daß der Polyimidfilm aus Polyetherimid besteht.

2. Feuchtesensor nach Anspruch 1, dadurch gekennzeichnet, daß eine metallische Schicht auf einem elektrisch hoch isolierendem Träger angeordnet ist.

3. Feuchtesensor nach Anspruch 1 oder 2, dadurch gekennzeichnet, daß der Träger (11) aus Glas oder Keramik und eine der beiden Elektroden (12) aus Tantal, Tantal/Tantaloxid, Gold, Gold/Nickel oder Silber/Palladium und die andere, wasserdampfdurchlässige Elektrode (15) aus Gold bestehen.

4. Feuchtesensor nach mindestens einem der Ansprüche 1 bis 3, dadurch gekennzeichnet, daß auf dem Träger (11) von einander elektrisch isoliert zwei Anschlußelektroden (12, 16) aus Tantal bzw. Tantal/Tantaloxid angeordnet sind, von welchen die eine (12) von dem Polyetherimidfilm (14) vollständig überdeckt ist, welcher auf seiner äußeren Seite mit der wasserdampfdurchlässigen Elektrode (15) aus Gold verbunden ist, die mit einem seitlich überstehenden Rand mit der anderen Anschluß-Elektrode (16) kontaktiert ist.

5. Kapazitiver Feuchtesensor nach mindestens einem der Ansprüche 1 bis 4, dadurch gekennzeichnet, daß der Polyimidfilm (14) aus in flüssiger Form auf den Träger (11) aufgebrachtem und verfestigtem Polyetherimid besteht.

6. Kapazitiver Feuchtesensor nach mindestens einem der Ansprüche 1 bis 4, dadurch gekennzeichnet, daß der Polyetherimidfilm (14) ein selbsttragender Folienfilm ist.

7. Kapazitiver Feuchtesensor nach mindestens einem der Ansprüche 1 bis 6, dadurch gekennzeichnet, daß die Elektrode (15 und/oder 16) auf den Polyetherimidfilm aufgedampft ist.

## Claims

1. A capacitive humidity sensor, consisting of a capacitor having at least two metallic layers forming the electrodes, at least one of which is permeable to water vapour, with a humidity-sensitive polyimide film being provided as a dielectric between the electrodes,
**characterised in that** the polyimide film is made from polyetherimide.

2. A humidity sensor according to Claim 1,
**characterised in that** a metal layer is disposed on an electrically highly insulating substrate.

3. A humidity sensor according to Claim 1 or 2,
**characterised in that** the substrate (11) is made from glass or ceramics and one of the two electrodes (12) is made from tantalum, tantalum/tantalum oxide, gold, gold/nickel or silver/palladium and the other electrode permeable to water vapour (15) is made from gold.

4. A humidity sensor according to at least one of Claims 1 to 3,
**characterised in that** two connecting electrodes (12, 16) made of tantalum or tantalum/tantalum oxide are disposed on the substrate (11) so that they are electrically insulated from one another, the one (12) of which is completely covered by the polyetherimide film (14), which is connected on its outer side to the electrode permeable to water vapour (15) made of gold, which with a laterally overhanging edge is in contact with the other connecting electrode (16).

5. A capacitive humidity sensor according to at least one of Claims 1 to 4,
**characterised in that** the polyimide film (14) is made of polyetherimide applied in liquid form onto the substrate (11) and hardened.

6. A capacitive humidity sensor according to at least one of Claims 1 to 4,
**characterised in that** the polyetherimide film (14) is a self-supporting foil film.

7. A capacitive humidity sensor according to at least one of Claims 1 to 6,
**characterised in that** the electrode (15 and/or 16) is vacuum evaporated on the polyetherimide film.

## Revendications

1. Capteur d'humidité capacitif composé d'un condensateur avec au moins deux couches métalliques formant les électrodes, l'une des couches au moins étant perméable à la vapeur d'eau, et le diélectrique entre les électrodes étant un film de polyimide sensible à l'humidité, caractérisé en ce que le film de polyimide est du polyetherimide.

2. Capteur d'humidité selon la revendication 1, caractérisé en ce qu'une couche métallique est prévue sur un support très isolant électriquement.

3. Capteur d'humidité selon la revendication 1 ou 2, caractérisé en ce que le support (11) est en verre ou en céramique et l'une des deux électrodes (12) et en tantale, tantale/oxyde de tantale, or, or/nickel ou argent/palladium et l'autre électrode (15), perméable à la vapeur d'eau, est en or.

4. Capteur d'humidité selon au moins l'une des revendications 1 à 3, caractérisé en ce que, sur le support (11), on réalise deux électrodes de branchement (12, 16) isolées l'une de l'autre, en tantale ou en tantale/oxyde de tantale, l'une des électrodes (12) étant recouverte complètement par le film de polyétherimide (14) recevant sur son autre face l'électrode (15), en or, perméable à la vapeur d'eau, et dont un bord latéralement en saillie est mis en contact avec l'autre électrode de branchement (16).

5. Capteur d'humidité capacitif selon au moins l'une des revendications 1 à 4, caractérisé en ce que le film de polyimide (14) est appliqué à l'état liquide sur le support (11) et est du polyétherimide susceptible de se solidifier.

6. Capteur d'humidité capacitif selon au moins l'une des revendications 1 à 4, caractérisé en ce que le film de polyétherimide (14) est une feuille autoportante.

7. Capteur d'humidité capacitif selon au moins l'une des revendications 1 à 6, caractérisé en ce que l'électrode (15 et/ou 16) est déposée à la vapeur sur le film de polyétherimide.
